# EUROPEAN PATENT APPLICATION

(11) **EP 2 528 014 A2**
(43) Date of publication of application: **28.11.2012**
(21) Application number: 12168906.1
(22) Date of filing: 22.05.2012
(51) Int. Cl.: G06K 7/10, G07B 15/00, G06Q 20/30

(54) **Transferring information by optically scanning variable patterns displayed on a graphical display device**

(30) Priority: 23.05.2011 GB 201108595
(71) Applicant: Jenton International Limited, Evingar Road Whitchurch Hampshire RG28 7BB (GB)
(72) Inventor: Little, Richard, Whitchurch, hampshire RG28 7BB (GB); Atkinson, John, Whitchurch, hampshire RG28 7BB (GB); Sion, Russell, Whichurch, hampshire RG28 7BB (GB); Smith, Toby, Whitchurch, Hampshire RG28 7BB (GB)
(74) Representative: Mackenzie, Andrew Bryan

(57) **Abstract**

The invention describes a means for presenting variable information contained within a variable pattern displayed on a device with a graphical display capability, such as a liquid crystal display (11) for example, wherein the device presents the information by generating graphical patterns (12) that contain information, such as a two-dimensional barcode (12) for example. The information presented by the display (11) can then be transferred to another device such as a mobile phone (13) for example, by optical scanning of the pattern presented by the graphical display device.

## Description

### Technical Field

The invention relates generally to the interpretation of information contained within a pattern displayed on a device with a graphical display capability, such as a liquid crystal display for example, such that the device can generate graphical patterns, such as a two-dimensional barcode for example, that contain information which may be variable. The information presented by the display can then be transferred to another device such as a mobile phone for example, by optical scanning of the pattern presented by the graphical display device.

### Background

In a variety of different applications, information about a process or item or about the current and past status of that process or item is required by an operator, user or inspector. When accessing information, it is often convenient to be able to access information generated by sensors, timers, counters and the like pertinent to the application at hand instantly and or remotely and or without making physical contact with the process or item.

For example when performing an inspection it can be useful to have a checklist of the actions that need to be carried out at a particular location or when operating or repairing an item of equipment it can be useful to have access to the user guide etc. It is usually impractical to carry all the information pertaining to a particular application, even in electronic form, due to the sheer bulk of information that would be required to cover all eventualities but instead it is often desirable to be able to access only the information that is required at the time and at a specific location. This can be done by encoding the information, or a pointer to a repository of the information, in the form of a code, such as a barcode or RFID tag, at a point local to where the information is required such that the information can be accessed using a portable device such as a mobile phone for example. In this method of working the accessed information is essentially fixed by the storing of RFID data or by dint of being a printed barcode for example such as a Quick Response (QR) or other similar 2-dimensional (2-D) barcode. Other examples may include but are not limited to the use of graphical shapes to represent information.

However in some situations there are significant benefits if the optically scannable displayed information can easily be modified to reflect changes in the information as appertaining to the state or situation of the monitored process or item for example. These changes in the information could also reflect changes due to the point in time at which the information is accessed, such as a change in a charging tariff or the price of an item for example.

In the present invention, this can be achieved through the use of a changeable display such as a liquid crystal display (LCD) for example, whereby the pattern on the display can be modified to present different information at different times and/or locations. In this way a display can be made to display information relevant to a location or a time or a situation simply by altering the code displayed.

An example is where a two-dimensional barcode can be presented on a display such that it displays different information at different times. This could be useful for example where a display device can be attached to an item of equipment so as to display information relevant to the condition or performance of the equipment, for example its speed or its temperature or its vibration. The chief advantage of this method of displaying and transferring data is that different patterns may be generated by the same display to communicate different or changing information at different times and such that a simple inspection using a portable device such as a mobile phone with an optical scanning capability such as a camera input for example can decode and display this information to allow data collection and also quick action by user or operator dependent on the information being displayed.

The invention described here has the further advantage in that the portable device used to scan or collect information can be any pre-existing device with an optical scanning capability, for example a mobile phone or handheld computer such as an iPad having a camera either built-in or attached or a barcode reader or indeed any other form of optical scanning input capability. This use of pre-existing devices may confer cost benefits in that they would not require subsequent purchase if already possessed however the invention is not limited to the use of pre-existing devices and there are instances where a device purpose designed for carrying out the scanning of the pattern encoded information may be preferable.

Examples of where the invention may find application include, but are not limited to, its use for walk-around data collection for building services and other asset management applications where not just an asset's presence can be verified but also information appertaining to the asset may be recorded, for example, pressure in a heating system, temperature of a hospital ward or water tank, oil level in a generator or fuel level in a fuel tank. This information may also for example be used as the basis for forming a condition based or predictive maintenance system.

Another example of the application of the invention includes its use in walk-around data collection for specific industrial equipment, such as a printing press for example, where operational data relating to ink viscosity, speed, production rates or ultraviolet lamp performance can be easily collected as part of an asset management / inspection routine.

Additionally for example medical patients who have been instrumented with sensors for periodic monitoring could have sensors wired to a small unit with a display that medical staff can optically scan for regular updates and the patient can retain mobility. This method of scanning may be particularly beneficial where the use of alternative wireless technologies may have interference issues in this context.

There are also applications where the information to be displayed needs to be kept 'secret', examples may include but are not limited to the output of counters, readers, sensors and such like whose output can be displayed via the use of an encrypted variable display pattern that can only be read by pre-authorised personnel. The invention described here is capable of using encoding techniques to present the data such that it is clearly visible and can easily be scanned but can only be interpreted if the encryption method is known. In this way it would be possible for example to make different levels of data available according to the permitted security level of for example differing software applications looking at the same graphical pattern (e.g. barcode). It may also be advantageous to change the encryption method used in the graphical representation of the displayed information from time to time and this is facilitated by the present invention in that the graphical pattern can be easily changed.

A further advantage of the invention is that the displayed pattern may be quickly and sequentially changed for another giving additional information to the first and then again giving additional information to the second and so on thereby saving on the cost and space requirements of the display in that a smaller display can be used to communicate for example a succession of graphical images each containing different information.

A further advantage of the invention is that the display may be positioned at a distance from the process or item that is being monitored for convenience or safety reasons.

The ability of the invention to change the information displayed can also be beneficial in situations where some form of payment is required. Examples include where a display is required to show pricing information that is variable from time to time. For example the display on a vending machine may be scanned using a mobile phone camera to communicate the price of an item with different selected items showing different encoded prices on the display. Advantages of this approach include the ability to alter the prices easily from a remote location over a communication medium such as the internet or a mobile phone network for example and also for a user to make payment for the item in the same way, for example over a mobile phone network.

A further example is where a car parking facility can display different tariffs depending on the time and day such that the current cost can be determined by scanning the display with the use of a mobile phone for example.

In any of these examples it may also be desirable for the payment for an item or service or the use of a facility or any other financial transaction to be made via the mobile phone or other portable device such as a handheld or portable computer connected via a communication means. It is also possible to arrange for different users to access the codes in different ways such that different rates can be charged for the same code. The appropriate rate may for example be determined by the software on a portable device that is interpreting the encoded displayed information. One example could be where employees of an organization may be given a preferential rate compared to the general public.

### Summary of the Invention

According to a first aspect of the invention, there is provided a means comprising a display unit that is capable of displaying information in graphical form that can be locally accessed by optically scanning the display.

The displayed information may take the form of a two-dimensional barcode or other suitable pattern non-character based encoding technique. The display unit can take many forms but a preferred embodiment is a liquid crystal display that is capable of displaying graphics such that a two-dimensional barcode can be displayed with sufficient resolution that it may be scanned easily by a portable device such as a mobile SMART phone such as an "Apple i-Phone" or handheld computer for example. The scanning may typically be achieved through the use of a camera or other optical input device such as a laser diode/sensor combination including those that use either visible or invisible (e.g. infrared) light or indeed any other optical scanning device.

A further desirable aspect of the display is that it is of a type that can passively retain the pattern displayed in the absence of any significant electrical power. In this manner the display performs a similar role to a passive barcode in that information is displayed without requiring any significant amount of power. The difference is however, that the display may be changed through the momentary application of electrical power to enable it to display a different graphical representation and hence different information content. In this way the same display can be re-used to present different information thereby resulting in significant cost savings and increased functionality and versatility of use and the practicality of the system is enhanced, for example due to the longer life in service of a battery powered device of this description.

A further desirable aspect of the display is that it can sequentially display differing graphical patterns / barcodes in such a way that the optical scanner for example the camera of a portable device such as a mobile smart phone can differentiate between such sequential codes and the cumulative information contained in sequential and additional graphical patterns or barcodes can be combined to allow a greater transfer of information from the process or item being monitored.

A further advantage of this invention is that it is possible to vary the information displayed depending on the date or time or the status of a process or item to which the information relates. Example of this include situations where variable pricing information is to be displayed or the current value of a monitored variable such as a pressure or temperature for example.

A further advantage of this method of communicating information is that it is possible to place the display inside a sealed container and scan the information through an optically transparent window for example, hence rendering a device suitable for a variety of different environments. For example the container may be made waterproof and allow operation in wet areas. Additionally the container may be made airtight to allow its use in potentially flammable or explosive atmospheres, in other words the device may be made intrinsically safe.

A further possibly desirable feature of the invention is where the display is integral to a sensor or an item of equipment for example. If the display and, for example, a sensor were in the same case this would reduce costs and facilitate simple installation through the use of a magnetic clip or cable tie or other suitable means for affixing the case. Also if a low energy display is used relatively little power is required to display and convey the information from a sensor or other information source thereby facilitating the use of battery power means for longer term operation.

### Brief Description of the Drawings

The invention will now be described by way of example, with reference to the drawings, which illustrate one particular embodiment of the invention in which:

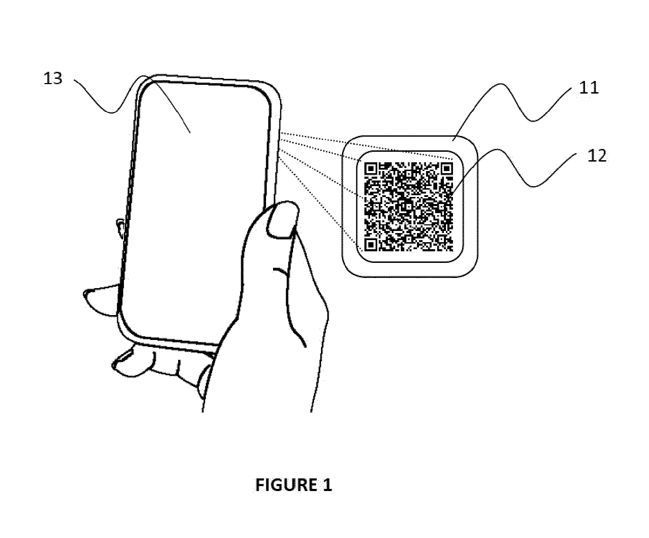

Figure 1 is a diagram of an apparatus in accordance with the invention being used to present information in the form of a two-dimensional barcode displayed on a liquid crystal display that can be optically scanned by a portable device;

### Detailed description of a preferred embodiment

With reference to the drawings, Figure 1 shows one embodiment of the invention consisting of a display device *11* that presents variable information in the form of a two-dimensional barcode *12* and a mobile phone *13* on which software may be run so as to perform the function of the optical scanning of the pattern encoded information displayed by the display device by interpretation of the image captured by a camera integral to the mobile phone. Obviously other portable devices may also be used in place of a mobile phone such as handheld computers, data entry devices and etc. The portable device may be used to retrieve data locally at the point where it is required via for example the scanning of a barcode that contains the information that is required. As an alternative the barcode may contain information, such as a world-wide web address for example, that refers to a location that contains the actual information required such that the mobile device may access said required information via a connection such as a wireless LAN or mobile phone network for example.

## Claims

1. Apparatus comprising a display that graphically communicates variable information encoded as one or more patterns and **characterized in that** said pattern or patterns may be scanned optically by another device such as to obtain said information from the pattern or patterns displayed by the first display.

2. Apparatus according to claim 1 wherein the patterns displayed may be altered electronically to present changed or changing information.

3. Apparatus according to claim 1 wherein the variable information graphically communicated is sourced from one or more sensors or the output of a programmable logic controller, counter, timer or meter or a human-machine-interface.

4. Apparatus according to claim 1 wherein information is encoded as a barcode displayed on a graphical display.

5. Apparatus according to claim 1 wherein information is encoded in the form of a multi-dimensional or multi-directional barcode displayed on a graphical display.

6. Apparatus according to claim 1 wherein information is displayed on a liquid crystal display.

7. Apparatus according to claim 1 wherein information is encoded on a display that indefinitely retains a pattern encoded form of the information.

8. Apparatus according to claim 1 wherein information is encoded on a display that retains a pattern encoded form of the information in the absence of any significant level of electrical power.

9. Apparatus according to claim 1 wherein the information displayed on a display is optically scanned using a camera incorporated in a mobile device or a mobile phone.

10. Apparatus according to claim 1 wherein the pattern displayed may be changed and displayed in a sequence of patterns.

11. Apparatus according to claim 1 where a sequence of patterns may be displayed that may be sequentially and cumulatively scanned to allow a greater transfer of information from a given display.

12. Apparatus according to claim 1 wherein information is encoded on a display in an encrypted form wherein the method of encryption may be changed.

13. Apparatus according to claim 1 wherein the information is used for pricing or tariff or financial charging purposes or to facilitate a financial transaction.

14. Apparatus according to claim 1 wherein the display is integral to a sensor or an item of equipment.

15. Apparatus according to claim 1 wherein the display is contained inside an air tight container and accessed by optical scanning through a window.
